# EUROPÄISCHE PATENTSCHRIFT

(11) **EP 0 986 855 B1**
(45) Veröffentlichungstag und Bekanntmachung des Hinweises auf die Patenterteilung: **24.04.2002**
(21) Anmeldenummer: 99907573.2
(22) Anmeldetag: 26.02.1999
(51) Int. Cl.: H02P 6/14

(54) **ELEKTRONISCH KOMMUTIERTER MOTOR**
ELECTRONICALLY COMMUTATED MOTOR
MOTEUR A COMMUTATION ELECTRIQUE

(30) Priorität: 19.05.1998 DE 29809025 U
(43) Veröffentlichungstag der Anmeldung: 22.03.2000
(73) Patentinhaber: Papst-Motoren GmbH & Co. KG, 78112 St. Georgen (DE)
(72) Erfinder: KUNER, Arnold, D-78112 St. Georgen (DE); MOOSMANN, Helmut, D-78126 Königsfeld (DE); JESKE, Frank, D-78112 St. Georgen (DE)
(86) Internationale Anmeldenummer: EP9901265
(87) Internationale Veröffentlichungsnummer: WO9960694

(56) Entgegenhaltungen:
- EP-A- 0 722 214
- DE-A- 3 342 986

## Beschreibung

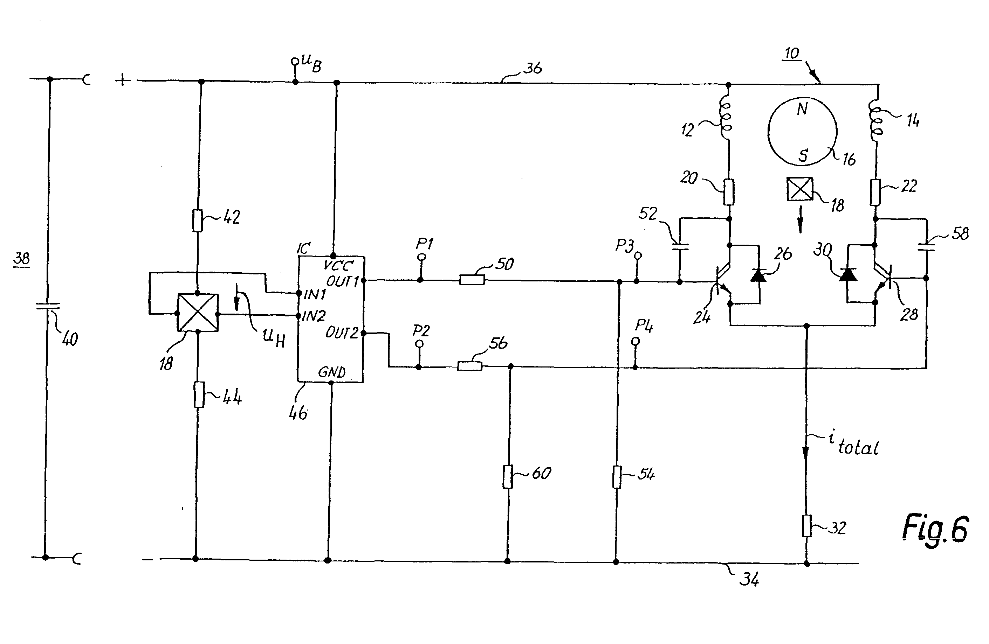

Die Erfindung betrifft einen elektronisch kommutierten Motor mit mindestens zwei Statorwicklungssträngen, von denen jeder über einen zugeordneten Leistungstransistor einschaltbar ist. Solche Motoren werden häufig auch als Zweiphasenmotoren bezeichnet und in großen Stückzahlen verwendet, vor allem in Lüftem. Fig. 6 zeigt eine von der Anmelderin derzeit verwendete Schaltung zur Ansteuerung solcher Motoren.

Oftmals müssen derartige Motoren mit sehr unterschiedlichen Spannungen betrieben werden können. Z.B. wird ein Lüfter mit einer Nennspannung von 24 V in der Praxis mit Spannungen zwischen 12 V und 32 V betrieben, also in einem Spannungsbereich von - 50 % bis + 30 %. Je nach Spannung läuft ein solcher Lüfter dann mit der gewünschten Drehzahl, also langsam bei niedrigen Spannungen, und schnell bei hohen Spannungen.

Bei der Kommutierung des Motorstroms von einem Statorwicklungsstrang zum anderen kann die Umschaltung "hart" oder "weich" erfolgen. Hartes Schalten bringt einen guten Wirkungsgrad, aber hohe Körperschallwerte infolge der Kommutierungsgeräusche, und außerdem EMV-Probleme. (EMV = elektromagnetische Verträglichkeit). Außerdem müssen schützende Maßnahmen für die Endstufentransistoren vorgesehen werden, damit die kritischen Grenzwerte der Bauelemente (zulässige Kollektorspannungen etc.) nicht überschritten werden. Dies kann durch interne Z-Dioden, die also im Endstufentransistor enthalten sind, oder durch exteme Z-Dioden (zur Begrenzung dieser Spannungen), oder durch Freilaufdioden erreicht werden, welche die Abschaltenergie der Wicklungen auf einen Betriebsspannungs-Zwischenkreis zurückspeisen, der einen Kondensator enthält, welcher diese Abschaltenergie aufnehmen kann.

Fig. 6 zeigt einen Motor 10 mit zwei Statorwicklungssträngen 12, 14 und einem (nur symbolisch angedeuteten) permanentmagnetischen Rotor 16, in dessen Nähe ein Hallgenerator 18 angeordnet ist, der in Fig. 6 auch links dargestellt ist. Mit 20 und 22 sind die ohmschen Widerstände der Stränge 12 bzw. 14 bezeichnet. Der Strang 12 liegt in Reihe mit einem npn-Darlingtontransistor 24 mit eingebauter Freilaufdiode 26, und der Strang 14 liegt in Reihe mit einem npn-Darlingtontransistor 28 mit eingebauter Freilaufdiode 30. Die Emitter der Transistoren 24, 28 sind über einen gemeinsamen Emitterwiderstand 32 mit einer Minusleitung 34 verbunden. Die Stränge 12, 14 sind wie dargestellt mit einer Plusleitung 36 verbunden. Die Leitungen 34, 36 werden im Betrieb mit einem Netzgerät 38 verbunden, das einen Speicherkondensator 40 enthält. Dieser dient dazu, die Abschaltenergie der Statorstränge 12, 14 aufzunehmen, welche über die Freilaufdioden 26, 30 in diesen Kondensator 40 zurückgespeist wird. Sofem der Motor aus einem Akkumulator gespeist wird, wird die Abschaltenergie in den Akkumulator zurückgespeist.

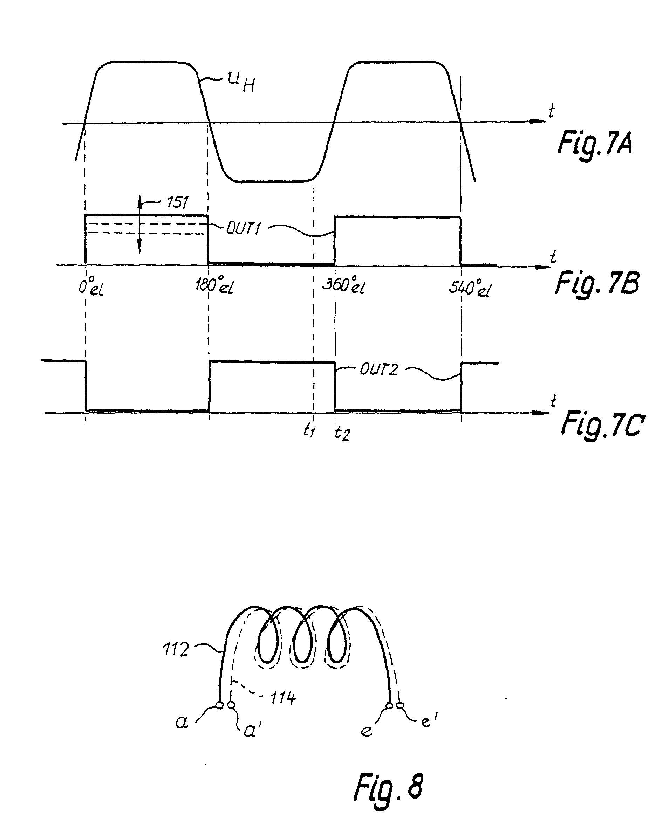

Der Hallgenerator 18 ist über einen Widerstand 42 mit der Plusleitung 36 und über einen Widerstand 44 mit der Minusleitung 34 verbunden. Sein Ausgangssignal u_{H} (Fig. 7A) wird den beiden Eingängen IN1 und IN2 eines IC 46 zugeführt, das Signale OUT1 und OUT2 zur Steuerung der Transistoren 24, 28 erzeugt und das gleichzeitig eine Blockiersicherung des Motors 10 bewirkt, d.h. wenn sich dieser nicht drehen kann, wird er durch das IC 46 abgeschaltet. Es handelt sich hier um das IC ROHM BA6406. Fig. 7A zeigt das Signal u_{H}, Fig. 7B das Signal OUT1 des IC 46, und Fig. 7B das Signal OUT2. Die Signale OUT1 und OUT2 verlaufen gegenphasig zueinander.Das Signal OUT1 wird über einen Widerstand 50 (z.B. 8,2 kΩ) der Basis des Transistors 24 zugeführt, die über einen Kondensator 52 (z.B. 1 nF) mit dem Kollektor und über einen Basisableitwiderstand 54 (z.B. 1,2 kΩ) mit der Minusleitung 34 verbunden ist. In gleicher Weise wird das Signal OUT2 über einen Widerstand 56 der Basis des Transistors 28 zugeführt, welche über einen Kondensator 58 mit dessen Kollektor und über einen Basisableitwiderstand 60 mit der Minusleitung 34 verbunden ist.

Im Betrieb werden die Transistoren 24, 28 durch die Signale OUT1, OUT2 altemierend eingeschaltet. Durch die Kombination von Widerstand 50 und Kondensator 52 und den gemeinsamen Widerstand 32 wird ein weiches Schalten des Transistors 24 bewirkt. Ebenso bewirkt der Widerstand 56 in Verbindung mit dem Kondensator 58 und dem gemeinsamen Widerstand 32 ein weiches Schalten des Transistors 28. Jedoch bewirken diese Maßnahmen eine erhöhte Erwärmung der Transistoren 24, 28 und folglich eine Reduzierung des Wirkungsgrads. Außerdem lässt sich die Schaltung optimal nur für einen einzigen Arbeitspunkt auslegen, also für eine bestimmte Drehzahl und ein bestimmtes Drehmoment Dies hat viele Kompromisse zur Folge, besonders bei Überspannungen und Übertemperaturen. Man erreicht hiermit in der Praxis auch nur einen Spannungsbereich von ± 15 %.

Femer kennt man aus der DE-A-3 342 986 einen elektronisch kommutierten Motor mit einem Stator, einem Rotor, und zwei Statorwicklungssträngen, von denen jeder über einen zugehörigen Leistungstransistor einschaltbar ist und die, abhängig von der Stellung des Rotors, durch Rotorstellungssignale im Gegentakt ansteuerbar sind, welche Signale den Basen der Leistungstransistoren jeweils über eine Widerstand zuführbar sind. Durch eine kapazitive Kopplung der Signale an den Basen soll hierbei verhindert werden, dass unerwünschte Stromspitzen des Motorstroms auftreten.

Aus der EP-A-0 722 214 kennt man einen elektronisch kommutierten Motor mit zwei Wicklungssträngen, von denen jeder über einen zugeordneten Leistungstransistor einschaltbar ist. Einer der Leistungstransistoren wird durch einen Phasenumkehrtransistor angesteuert, dessen Kollektor über einen Widerstand mit der Basis dieses Leistungstransistors verbunden ist und der über einen Widerstand mit dem Basissignal des anderen Leistungstransistors angesteuert wird. Es geht hier darum, mit steigender Drehzahl die Verluste in den Leistungstransistoren zu reduzieren.

Es ist deshalb eine Aufgabe der Erfindung, einen neuen elektronisch kommutierten Motor bereitzustellen.

Nach der Erfindung wird diese Aufgabe gelöst durch den Gegenstand des Anspruchs 1. Durch die wechselseitige Beeinflussung der Leistungstransistoren erreicht man, dass ein derartiger Motor in einem großen Bereich seiner Betriebsspannung U_{B} verwendbar ist, ferner, dass während der Kommutierung kurzzeitig beide Leistungstransistoren gesperrt sind, was Bremsmomente verhindert und den Wirkungsgrad verbessert, und dass die Art der Kommutierung an die Drehzahl angepasst werden kann (weiche Kommutierung bei niedriger Drehzahl, harte Kommutierung bei hoher Drehzahl), was dadurch erreichbar ist, dass die Art des Anstiegs bzw. Abfalls des Kommutierungssignals von der Drehzahl abhängig ist. Auch ist eine solche Lösung sehr preisgünstig.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: ein Schaltbild einer bevorzugten Ausführungsform eines elektronisch kommutierten Motors nach der Erfindung,
- Fig. 2: ein Schaubild, welches bei dem Motor nach Fig. 1 die Abläufe während einer Kommutierung bei einer Unterspannung von minus 50 % (12 V) zeigt; die normale Betriebsspannung würde bei diesem Beispiel 24 V sein,
- Fig. 3: ein Schaubild analog Fig. 2 für den Motor nach Fig. 6 gemäß dem Stand der Technik,
- Fig. 4: ein Schaubild, welches bei dem Motor nach Fig. 1 die Abläufe während einer Kommutierung bei einer Überspannung von plus 16,5 % (28 V) zeigt,
- Fig. 5: ein Schaubild analog Fig. 4 für den Motor nach Fig. 6 gemäß dem Stand der Technik,
- Fig. 6: ein Schaltbild eines Motors nach dem Stand der Technik,
- Fig. 7: Schaubilder zur Erläuterung der Wirkungsweise von Fig. 1 und 6,
- Fig. 8: ein schematisches Diagramm zur Erläuterung einer ersten Ausführungsform der Statorwicklung, und
- Fig. 9: ein schematisches Diagramm zur Erläuterung einer zweiten Ausführungsform der Statorwicklung.

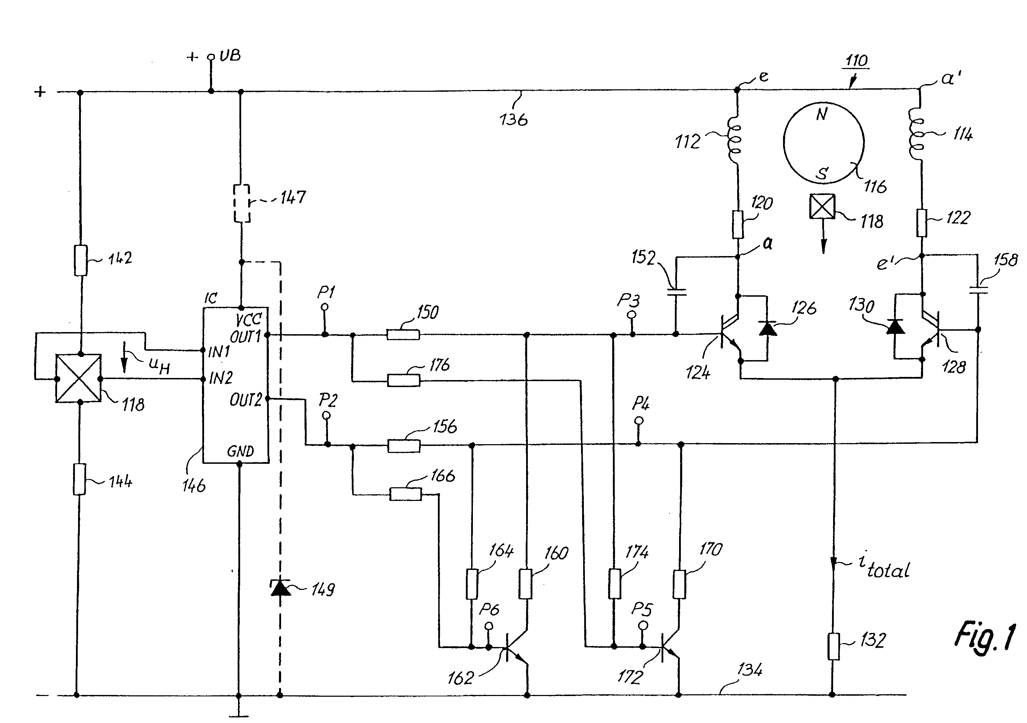

Der elektronisch kommutierte Motor 110 gemäß Fig. 1 hat zwei Statorwicklungsstränge 112, 114 und einen (nur symbolisch dargestellten) permanentmagnetischen Rotor 116, in dessen Nähe ein Hallgenerator 118 angeordnet ist, der in Fig. 1 auch links dargestellt ist. Mit 120 und 122 sind die ohmschen Widerstände der Stränge 112 bzw. 114 bezeichnet.

Gemäß Fig. 8 sind die beiden Stränge 112, 114 beispielweise dadurch miteinander gekoppelt, daß die Wicklung mit zwei paralleien Drähten erfolgt, also als sogenannte bifilare Wicklung. Die Anschlüsse des Strangs 112 sind mit a und e bezeichnet, die des Strangs 114 mit a' und e', wie in Fig. 1, 8 und 9 angegeben. Im Strang 112 fließt also der Strom von a nach e, und im Strang 114 von e' nach a', so daß diese beiden Stränge entgegengesetzte magnetische Flüsse erzeugen. Der Motor 110 kann z.B. so aufgebaut sein, wie das in der DE 23 46 380 dargestellt ist.

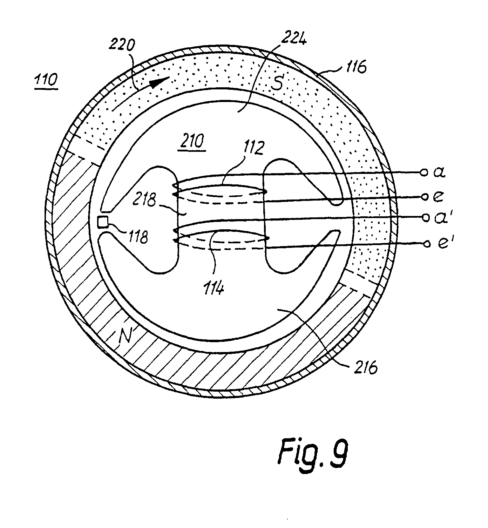

Alternativ können die Stränge 112, 114 des Motors 110 durch das Blechpaket des Stators induktiv miteinander gekoppelt sein. Dies zeigt Fig. 9 am zweipoligen Stator 210 eines Außenläufermotors. Die Wicklung 112 ist hierbei auf den oberen Statorpol 214 gewickelt, und die Wicklung 114 auf den unteren Statorpol 216. Der Teil 218 des Blechpakets zwischen den Polen 214, 216 bewirkt eine enge magnetische Kopplung der Wicklungsstränge 112, 114. Die bevorzugte Drehrichtung des Motors der Fig. 9 ist mit 220 bezeichnet. In Fig. 9 steht der Innenstator 210 still, und der zweipolige Rotor 116 dreht sich um ihn.

Der Strang 112 liegt gemäß Fig. 1 in Serie mit einem npn-Darlingtontransistor 124 mit eingebauter Freilaufdiode 126, und der Strang 114 liegt in Serie mit einem npn-Darlingtontransistor 128 mit eingebauter Freilaufdiode 130. Die Emitter der Transistoren 124, 128 sind beim dargestellten Ausführungsbeispiel in vorteilhafter Weise über einen gemeinsamen Emitterwiderstand 132 mit einer Minusleitung 134 verbunden. Ggf. kann aber auch jeder Transistor 124, 128 seinen eigenen Emitterwiderstand haben. Die Stränge 112, 114 sind, wie dargestellt, mit einer Plusleitung 136 verbunden. Die Leitungen 134, 136 werden im Betrieb gewöhnlich mit einem Netzgerät 38 (Fig. 6) verbunden, das einen Speicherkondensator 40 enthält. Dieser dient dazu, die Abschaltenergie der Statorstränge 112, 114 aufzunehmen, welche über die Freifaufdioden 126, 130 in diesen Kondensator 40 zurückgespeist wird.

Je nachdem, wie "weich" die Endstufen 124, 128 bei der Kommutierung umgeschaltet werden, verringert sich die Abschaltenergie, die bei der Kommutierung in den Kondensator 40 zurückgespeist werden muß. Im günstigsten Fall kann ein solcher Kondensator 40 entfallen, da durch ein langsames Abschalten der Transistoren 124, 128 diese Energie in den Endstufen vollständig in Wärme umgesetzt werden kann.

Der Hallgenerator 118 ist über einen Widerstand 142 mit der Plusleitung 136 und über einen Widerstand 144 mit der Minusleitung 134 verbunden. Sein Ausgangssignal u_{H} (Fig. 7A) wird den beiden Eingängen IN1 und IN2 eines IC 146 zugeführt, das Signale OUT1 und OUT2 zur Steuerung der Transistoren 124, 128 erzeugt und das gleichzeitig eine Blockiersicherung des Motors 110 bewirkt, d.h. wenn sich dessen Rotor 116 nicht drehen kann, wird er durch das IC 146 abgeschaltet. Fig. 7A zeigt dieses Signal u_{H}, Fig. 7B das Signal OUT1 des IC 46, und Fig. 7B das Signal OUT2. Die beiden letztgenannten Signale verlaufen gegenphasig zueinander. Das Signal OUT1 wird über einen Widerstand 150 der Basis des Transistors 124 zugeführt, die über einen Kondensator 152 (Millerkondensator) mit dem Kollektor des Transistors 124 verbunden ist. In gleicher Weise wird das Signal OUT2 über einen Widerstand 156 der Basis des Transistors 128 zugeführt, welche über einen Kondensator 158 (Millerkondensator) mit dessen Kollektor verbunden ist.

Das IC 146 ist, wie dargestellt, mit seinem Anschluß Vcc an die Plusleitung 136 und mit seinem Anschluß GND an die Minusleitung 134 angeschlossen. Ggf. kann in der Verbindung zur Plusleitung 136 ein Widerstand 147 angeordnet sein, und der Anschluß V_{cc} kann über eine Z-Diode 149 mit der Minusleitung 134 verbunden sein. Die Zenerspannung der Diode 149 kann dabei oberhalb der Nenn-Betriebsspannung U_{B} liegen, z.B. bei 28 V, wenn der Motor für 24 V ausgelegt ist. Dadurch steigen die Amplituden der Signale OUT1, OUT2 bis zu einer Spannung von 28 V an und bleiben dann konstant, wenn U_{B} noch weiter ansteigt. In Fig. 7B ist die variable Amplitude des Signals OUT1 durch einen Pfeil 151 angedeutet. Dies gilt genauso für das Signal OUT2, ist dort aber nicht dargestellt.

Unterhalb der Zenerspannung hat man also eine Abhängigkeit der Signalamplituden von U_{B}, nicht aber darüber. Ohne die Z-Diode 149 besteht diese Abhängigkeit im gesamten Bereich von U_{B}.

Die Basis des Transistors 124 ist über einen Basisableitwiderstand 160 und die Kollektor-Emitter-Strecke eines npn-Transistors 162 mit der Minusleitung 134 verbunden. Die Basis des Transistors 162 ist über einen Widerstand 164 mit der Basis des Transistors 128 und über einen Widerstand 166 mit dem Ausgang OUT2 des IC 146 verbunden. Das Verhältnis von Widerstand 164 zu 166 beträgt z.B. 3:100, d.h. der Einfluß des Signals an der Basis des Transistors 124 ist stärker als der des Signals OUT1.

In völlig symmetrischer Weise ist die Basis des Transistors 128 über einen Basisableitwiderstand 170 und die Kollektor-Emitter-Strecke eines npn-Transistors 172 mit der Minusleitung 134 verbunden. Die Basis des Transistors 172 ist über einen Widerstand 174 mit der Basis des Transistors 124 und über einen Widerstand 176 mit dem Ausgang OUT1 des IC 146 verbunden. Die Werte der Widerstände 174, 176 entsprechen denen der Widerstände 164, 166.

Die beiden Transistoren 162, 172 können einerseits als Verriegelungstransistoren bezeichnet werden, da sie die beiden Leistungstransistoren 124, 128 gegeneinander verriegeln und verhindern, daß beide zur gleichen Zeit leitend sind. Andererseits schalten diese Transistoren nicht einfach nur ein oder aus, sondern sie aktivieren im Bereich der Kommutierung die Basisableitwiderstände 160 bzw. 170, während in den Zeitbereichen außerhalb der Kommutierung beide Widerstände 160, 170 nicht aktiv sind.

Bei der bisherigen Schaltung gemäß Fig. 6 sind die Basisableitwiderstände 54, 60 ständig aktiv. Dies ist besonders bei Unterspannung nachteilig, da z.B. in Fig. 6 der Widerstand 60 mit dem Widerstand 56 einen Spannungsteiler bildet, der bei einer niedrigen Betriebsspannung U_{B} möglicherweise verhindert, daß der Transistor 28 einen ausreichenden Basisstrom erhält.

Da aber bei der Schaltung nach Fig. 1 die Basisableitwiderstände 160, 170 nur im Bereich des Kommutierungsvorgangs aktiv sind, nicht jedoch im Zeitbereich zwischen zwei Kommutierungen, entfallen in diesem Zeitbereich auch bei niedriger Spannung U_{B} Probleme durch die Widerstände 160, 170, da diese dann nicht wirksam sind, wie bereits beschrieben.

In der Schaltung sind verschiedene Prüfpunkte P1 bis P6 eingezeichnet. Wenn z.B. der Leistungstransistor 124 leitet, haben die Prüfpunkte P1 und P3 ein unterschiedliches Potential, da über den Widerstand 150 ein Basisstrom vom dann positiven (hohen) Ausgang OUT1 zur Basis des Transistors 124 fließt, und beim Abschalten des Transistors 124 ist zwar das Signal OUT1 niedrig, aber die Abschaltspannung des Strangs 112 wird durch den Kondensator 152 zur Basis des Transistors 124 übertragen und bewirkt, daß dieser Basis noch eine kurze Zeit ein Basisstrom zugeführt wird. Wegen der Symmetrie der Schaltung sind beim Transistor 128 die Verhältnisse identisch.

### Bevorzugte Werte der Bauelemente

Der Motor 110 ist bei diesem Beispiel für eine Betriebsspannung von 24 V Gleichspannung ausgelegt und hat eine Leistungsaufnahme von 2,4 W bei dieser Nennspannung.

| | |
|---|---|
| Hallgenerator 118 | HWA101 |
| IC 146 | ROHM BA6406 |
| Widerstand 132 | 1 Ω |
| Widerstände 150, 156 | 8,2 kΩ |
| Widerstände 160, 170 | 560 Ω |
| Widerstände 164, 174 | 1,5 kΩ |
| Widerstände 166, 176 | 47 kΩ |
| Kondensatoren 152, 158 | 3,3 nF |
| Transistoren 124, 128 | ZTX600 |
| Transistoren 162, 172 | BC847A |

### Arbeitsweise

Da die Anordnung symmetrisch ist, genügt es, die Vorgänge bei der Umschaltung des Stromes vom Strang 114 zum Strang 112 zu beschreiben, da die Vorgänge in umgekehrter Richtung, also bei Umschaltung vom Strang 112 zum Strang 114, genauso verlaufen.

Wenn der Strang 114 Strom führt, ist das Signal OUT1 niedrig und das Signal OUT2 hoch. Dies entspricht dem Zeitpunkt t₁ in Fig. 7. Dabei sperrt der Transistor 124, der Transistor 128 leitet, ebenso der Transistor 162, da er an seiner Basis ebenfalls das hohe Signal OUT2 erhält. Da jedoch OUT1 niedrig ist, fließt kein Strom über seine Kollektor-Emitter-Strecke, d.h. in diesem Zustand hat der Transistor 162 keinen Einfluß auf die Funktion des Motors und beeinflußt auch nicht dessen Wirkungsgrad.

Bei der Kommutierung zum Zeitpunkt t₂ (Fig. 7) wird das Signal OUT1 hoch und das Signal OUT2 niedrig. Der Transistor 162 leitet weiterhin, da er über den Widerstand 164 nach wie vor einen Basisstrom von der Basis des Transistors 128 erhält, und dadurch bleibt der Transistor 124 zunächst gesperrt, obwohl das Signal OUT1 hoch ist, da sein Basisstrom über den Widerstand 160 abgeleitet wird. Der Transistor 128 ist in diesem Zustand noch leitend, weil er über den Kondensator 158 weiterhin einen Basisstrom erhält.

Am Testpunkt P3 erhält man ein Potential, das durch die Widerstände 150, 160 und den Kondensator 152 bestimmt ist. Der Punkt P1 liegt dabei, wie bereits beschrieben (Pfeil 151 in Fig. 7B), auf einem Potential, das vom Potential der Plusleitung 136 abhängig ist. Das Potential am Punkt P3 nähert sich - wegen des Kondensators 152 - erst mit einer zeitlichen Verzögerung seinem Endwert, der durch die Widerstände 150, 160 bestimmt ist. Der Transistor 172 leitet zu diesem Zeitpunkt noch nicht. Das Potential an der Basis des Transistors 172 wird bestimmt durch das Signal OUT1, das in diesem Fall hoch ist, und durch den Spannungsteiler 176, 174, der an die Basis des Transistors 174 angeschlossen ist, welche zu diesem Zeitpunkt noch ein niedriges Potential hat. Dadurch bleibt der Transistor 172 vorläufig gesperrt.

Durch das Ansteigen der Ladung im Kondensator 152 steigt dann das Potential an P3 an, so daß der Transistor 172 zu leiten beginnt, was eine sichere Sperrung des Transistors 128 bewirkt, wobei beim Sperren des Transistors 128 die Zeitkonstante der Elemente 158 (Kondensator) und 170 (Widerstand) wirksam ist. (Die Stromverstärkung der Transistoren 162, 172 hat auf die zeitliche Verzögerung keinen großen Einfluß.) Sobald der Transistor 172 leitend wird, wird dem Transistor 162 der Basisstrom entzogen, der zuvor über den Widerstand 164 zu ihm geflossen war. Dadurch hört der Strom über den Basisableitwiderstand 160 auf, und der Transistor 124 wird freigegeben und kann nun mit einer Zeitkonstante einschalten, die durch den Widerstand 150 und den Kondensator 152 bestimmt wird. Der Transistor 128 ist zu diesem Zeitpunkt bereits stromlos, d.h. zwischen dem Ausschalten des Transistors 128 und dem Einschalten des Transistors 126 wird eine Schaltlücke erzeugt, in der weder der Transistor 124 noch der Transistor 128 leitend ist.

Unterstützt werden diese Vorgänge durch die in Fig. 8 und 9 beispielhaft dargestellte induktive Kopplung zwischen den Strängen 112, 114.

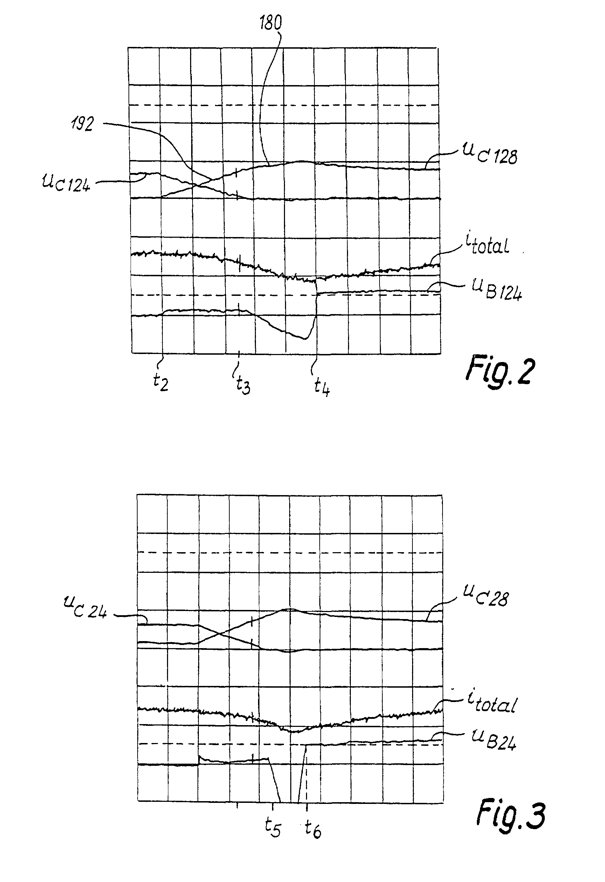

Fig. 2 zeigt die Abläufe bei einer niedrigen Spannung U_{B} von 12 V. Die Kurven u_{C128}, u_{C124} zeigen die Kollektorspannungen der Transistoren 128 bzw. 124.

Zum Zeitpunkt t₂ ändern sich die Signale OUT1 und OUT2. Während einer Übergangsphase bis zum Zeitpunkt t₃ nimmt die Spannung u_{C124} ab und u_{C128} nimmt zu, weil der Transistor 128 zu sperren beginnt. Durch die induktive Kopplung (Fig. 8) der Stränge 112, 114 entspricht die Zunahme von u_{C128} zwischen t₂ und t₃ im wesentlichen der Abnahme von u_{C124}, ohne daß der Transistor 124 hierbei schon leitet. Im Zeitraum von t₃ bis t₄ erzeugt die Abschaltspannung des Stranges 114 einen Anstieg 180 von u_{C128} und damit einen Freilaufstrom durch die Diode 130. Dies hält den Transistor 162 leitend, so daß ein Teil des Basisstroms des Transistors 124 über den Widerstand 160 fließt und der Transistor 124 erst zum Zeitpunkt t₄ einschalten kann, an dem seine Basisspannung u_{B124} genügend positiv wird, weil der Transistor 162 sperrt.

Transistor 128 ist also zum Zeitpunkt t₃ abgeschaltet, und Transistor 124 wird erst zum Zeitpunkt t₄ eingeschaltet, wodurch sich zwischen t₃ und t₄ eine Schaltlücke ergibt. Die Aus- und Einschaltvorgänge verlaufen sanft, so daß der Motor bei der Kommutierung wenig Körperschall erzeugt. Dies ist bei einem Lüfter wichtig, weil bei niedriger Drehzahl die Lüftergeräusche niedrig sein sollten.

Fig. 3 zeigt die analogen Vorgänge bei dem Motor gemäß Fig. 6, ebenfalls bei einer Unterspannung von 12 V. Dort ist der Transistor 28 etwa zum Zeitpunkt t₅ abgeschaltet, und zum Zeitpunkt t₆ wird der Transistor 24 eingeschaltet, d.h. die Schaltlücke ist hier kürzer. Außerdem sind hier, wie bereits erwähnt, die Widerstände 54 und 60 ständig aktiv, was für den Betrieb des Motors bei niedrigen Spannungen ungünstig ist.

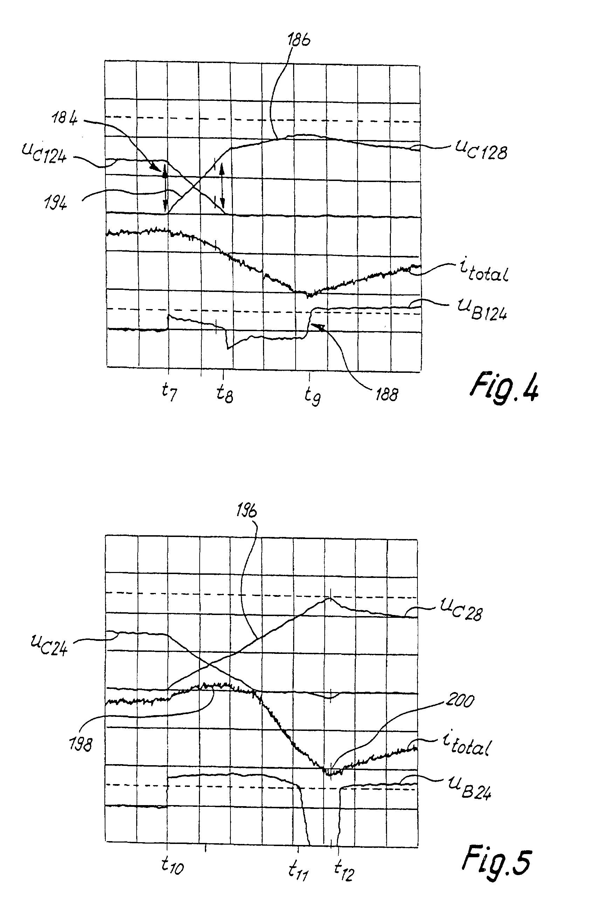

Fig. 4 zeigt die Vorgänge beim Motor der Fig. 1, wenn dieser mit einer Überspannung von 28 V betrieben wird. Der Rotor 16 rotiert dabei wesentlich schneller, d.h. die Vorgänge bei der Kommutierung müssen schneller ablaufen, damit die Leistung des Motors genügend groß ist und dieser eine hohe Drehzahl erreichen kann.

Zum Zeitpunkt t₇ ändern sich die Signale OUT1, OUT2, wodurch, infolge der induktiven Kopplung der Stränge 112, 114, die Spannung u_{C124} am Kollektor des Transistors 124 ab- und die Spannung u_{C128} am Kollektor des Transistors 128 bis zu einem Zeitpunkt t₈ zunimmt, in der Weise, daß sich Abnahme und Zunahme entsprechen. Diese induktive (transformatorische) Kopplung der Stränge (vgl. Fig. 8) ist durch einen Pfeil 184 hervorgehoben.

Anschließend bewirkt die Abschalt-Spannungsspitze am Strang 114 bei 186 einen Anstieg der Spannung u_{C128}, welcher die Schaltlücke weiter bis zu einem Zeitpunkt t₉ verlängert, an dem - durch das Sperren des Transistors 162 - die Basisspannung u_{B124} des Transistors 124 so weit ansteigt, daß dieser Transistor leitend wird. Der Anstieg von u_{B124} ist mit 188 bezeichnet. Die Schaltlücke dauert also bei hohen Spannungen und hoher Drehzahl von t₈ bis t₉.

Beim Vergleich der Fig. 2 und 4 erscheint wichtig, daß die Steilheit 192 des Anstiegs der Kollektorspannung u_{C128} bei Fig. 2 niedrig ist, und daß diese Steilheit 194 bei Fig. 4 hoch ist. Dies ist eine Folge davon, daß die Amplituden der Signale OUT1, OUT2 im hohen Zustand etwa proportional zur Betriebsspannung U_{B} sind, so daß die Ladung des Kondensators 152 (oder 158) und vor allem die Umschaltung des Transistors 172 (oder 162) bei hohem U_{B} schneller abläuft. Dies ist ein Folge des Spannungsteilers 166, 164 zwischen den Punkten P2 und P4, bzw. des Spannungsteilers 176, 174 zwischen den Punkten P1 und P3. Durch die höhere Eingangsspannung an P1 bzw. P2 wird an den Punkten P5 bzw. P6 entsprechend früher die notwendige Einschaltspannung erreicht, wenn die Spannung U_{B} höher ist.

Fig. 5 zeigt, daß beim Motor gemäß Fig. 6 die Steilheit 196 des Anstiegs von u_{C28} gegenüber Fig. 3 nicht wesentlich verändert ist, und daß bereits zum Zeitpunkt t₁₀, an dem sich die Signale OUT1, OUT2 ändern, das Signal u_{B24} so hoch wird, daß der Transistor 24 einschaltet, so daß zeitweilig beide Transistoren 24 und 28 leiten, was bei 198 zu einem Anstieg des Gesamtstroms iₜₒₜₐₗ führt.

Bei t₁₁ wird der Transistor 24 nochmals gesperrt, und bei t₁₂ wird er wieder leitend, was bei 200 zu einer entsprechenden Reduzierung des Gesamtstroms iₜₒₜₐₗ führt. Die Abschaltung zwischen t₁₁ und t₁₂ führt zu einer entsprechenden Erwärmung des Transistors 24 (durch die unnötigen Schaltvorgänge) und zu einem reduzierten Wirkungsgrad des Motors.

Durch die Erfindung erreicht man also bei allen Drehzahlen eine ausreichend große Schaltpause bei der Kommutierung. Bei niedriger Spannung U_{B} steigt und fällt bei der Kommutierung der Strom in einem Strang nur relativ langsam, d.h. man erhält eine Schaltfianke mit niedriger Steigung, wodurch sich ein leiser Lauf des Motors ergibt. Bei hoher Betriebsspannung U_{B} steigt und fällt bei der Kommutierung der Strom in einem Strang schnell. Dies verbessert den Wirkungsgrad und erhöht dadurch die maximale erreichbare Drehzahl, wobei jedoch der Körperschall des Motors ansteigt. Bei hohen Drehzahlen stört das nicht, da hierbei ohnedies alle Geräusche ansteigen.

Die Basisableitwiderstände 160, 170 welche durch die Transistoren 162 bzw. 172 ein- und ausgeschaltet werden, sind nur während der Kommutierung wirksam, wie bereits beschrieben, so daß sie den Wirkungsgrad des Motors nicht verschlechtern. Dies ermöglicht die Dimensionierung für einen großen Spannungsbereich.

Das Signal an der Basis des Leistungstransistors 124 steuert über den Widerstand 174 den Transistor 172. Das Signal an der Basis des Leistungstransistors 128 steuert über den Widerstand 164 den Transistor 162. Die Transistoren 162, 172 sind gegenseitig so verriegelt, daß stets nur einer von beiden leitend sein kann, und dadurch wird ausgeschlossen, daß beide Transistoren 124, 128 gleichzeitig leitend sind, und es wird eine definierte Schaltlücke bei der Kommutierung erzeugt, was ein "weiches" Schalten der Transistoren 124, 128 überhaupt erst ermöglicht. Dies zeigt der Vergleich der Fig. 4 und 5. Bei Fig. 5 sind zeitweise beide Transistoren 24, 28 gleichzeitig leitend, während bei Fig. 4 eine ausreichend große Schaltpause erzeugt wird.

Naturgemäß sind im Rahmen der vorliegenden Erfindung vielfache Abwandlungen und Modifikation möglich. Insbesondere könnten die verschiedenen Funktionen der beiden Verriegelungstransistoren 162, 172 auf eine größere Zahl von Transistoren verteilt werden, sofern die Kosten hierfür keine Rolle spielen.

## Patentansprüche

1. Elektronisch kommutierter Motor mit einem Stator und einem Rotor, mit mindestens zwei Statorwicklungssträngen (112, 114), von denen jeder über einen zugeordneten Leistungstransistor (124, 128) einschaltbar ist und die, abhängig von der Stellung des Rotors (116), durch Rotorstellungssignale (OUT1, OUT2) im Gegentakt ansteuerbar sind,
welche Signale den Basen dieser Leistungstransistoren jeweils über einen Widerstand (150, 156) zuführbar sind, **dadurch gekennzeichnet, dass** ein Basisableitwiderstand (160) für die Basis des einen Leistungstransistors (124)vorgesehen ist, welcher Widerstand (160) mit einem ersten Verriegelungstransistor (162) in Reihe geschaltet ist,
und dass ein Basisableitwiderstand (170) für die Basis des anderen Leistungstransistors (128) vorgesehen ist, welcher Widerstand (170) mit einem zweiten Verriegelungstransistor (172) in Reihe geschaltet ist,
wobei der erste Verriegelungstransistor (162) zumindest vom Basissignal des anderen Leistungstransistors (128) steuerbar ist, und der zweite Verriegelungstransistor (172) zumindest vom Basissignal des einen Leistungstransistors (124) steuerbar ist,
um bei der Kommutierung ein gleichzeitiges Leitendwerden beider Leistungstransistoren (124, 128) auszuschließen und durch Aktivieren bzw. Deaktivieren der Basisableitwiderstände (160, 170) den Kommutierungsvorgang zu steuern.

2. Motor nach Anspruch 1, bei welchem der erste Verriegelungstransistor (162) von einer Kombination des Rotorstellungssignals (OUT2) für den anderen Leistungstransistor (128) und dessen Basissignal steuerbar ist,
und der zweite Verriegelungstransistor (172) von einer Kombination des Rotorstellungssignals (OUT1) für den einen Leistungstransistor (124) und dessen Basissignal steuerbar ist.

3. Motor nach Anspruch 1 oder 2, bei welchem außerhalb der Kommutierungs-Zeitbereiche beide Basisableitwiderstände (160, 170) nicht wirksam sind.

4. Motor nach einem der vorhergehenden Ansprüche, bei welchem die im Gegentakt ansteuerbaren Wicklungsstränge (112, 114) induktiv gekoppelt sind.

5. Motor nach Anspruch 4, bei welchem die Wicklungsstränge (112, 114) bifilar gewickelt und/oder durch das Blechpaket des Stators gekoppelt sind.

6. Motor nach einem oder mehreren der Ansprüche 1 bis 5, bei welchem der eine Leistungstransistor (124) und der andere Leistungstransistor (128) einen gemeinsamen Emitterwiderstand (132) aufweisen.

7. Motor nach einem oder mehreren der Ansprüche 1 bis 6, bei welchem den Leistungstransistoren (124, 128) jeweils ein Millerkondensator (152, 158) zugeordnet ist.

8. Motor nach einem oder mehreren der vorhergehenden Ansprüche, bei welchem die Amplitude (151) eines Rotorstellungssignals (OUT1, OUT2) mit zunehmender Betriebsspannung (U_{B}) des Motors (110) zumindest in einem Teilbereich der Betriebsspannung zunimmt.

9. Motor nach einem oder mehreren der vorhergehenden Ansprüche, bei welchem zur Erzeugung der Rotorstellungssignale (OUT1, OUT2) ein Bauelement (146) vorgesehen ist, dessen Betriebsspannung (U_{B}) oberhalb eines vorgegebenen Wertes im wesentlichen konstantgehalten wird, um bei Überschreiten dieses vorgegebenen Wertes die Amplituden der Rotorstellungssignale konstantzuhalten.

10. Motor nach einem oder mehreren der vorhergehenden Ansprüche, bei welchem der Anstieg und/oder Abfall der Kollektorspannungen der Leistungstransistoren beim Kommutierungsvorgang eine Funktion der Betriebsspannung (U_{B}) ist.

## Claims

1. Electronically commutated motor with a stator and a rotor, with at least two stator phase windings (112, 114) each of which can be switched on by means of an associated power transistor (124, 128) and which can be actuated in push-pull mode by rotor position signals (OUT1, OUT2) according to the position of the rotor (116), which signals can be fed to the bases of these power transistors in each case via a resistor (150, 156), **characterised in that** a base leakage resistor (160) is provided for the base of one power transistor (124), which resistor (160) is connected in series with a first locking transistor (162), and **in that** a base leakage resistor (170) is provided for the base of the other power transistor (128), which resistor (170) is connected in series with a second locking transistor (172), whereby the first locking transistor (162) can be controlled at least by the base signal of the other power transistor (128), and the second locking transistor (172) can be controlled at least by the base signal of the first power transistor (124), in order to prevent the two power transistors (124, 128) being switched on at the same time during commutation and to control the commutation operation by activating or deactivating the base leakage resistors (160, 170).

2. Motor according to claim 1, in which the first locking transistor (162) can be controlled by a combination of the rotor position signal (OUT2) for the other power transistor (128) and its base signal, and the second locking transistor (172) can be controlled by a combination of the rotor position signal (OUT1) for the first power transistor (124) and its base signal.

3. Motor according to claim 1 or 2, in which both base leakage resistors (160, 170) are not active outside the commutation time ranges.

4. Motor according to one of the preceding claims, in which the phase windings (112, 114) which can be actuated in push-pull mode are coupled inductively.

5. Motor according to claim 4, in which the phase windings (112, 114) are double-wound and/or coupled by the package of laminations of the stator.

6. Motor according to one or more of claims 1 to 5, in which the first power transistor (124) and the other power transistor (128) exhibit a common emitter resistor (132).

7. Motor according to one or more of claims 1 to 6, in which the power transistors (124, 128) each have an associated Miller capacitor (152, 158).

8. Motor according to one or more of the preceding claims, in which the amplitude (151) of a rotor position signal (OUT1, OUT2) increases at least in a part of the range of the operating voltage as the operating voltage (U_{B}) of the motor (110) increases.

9. Motor according to one or more of the preceding claims, in which for production of the rotor position signals (OUT1, OUT2) a component (146) is provided the operating voltage (U_{B}) of which is essentially kept constant above a predetermined value in order to keep the amplitudes of the rotor position signals constant when this predetermined value is exceeded.

10. Motor according to one or more of the preceding claims, in which the rise and/or fall of the collector voltages of the power transistors during the commutation operation is a function of the operating voltage (U_{B}).

## Revendications

1. Moteur à commutation électronique équipé d'un stator et d'un rotor, d'au moins deux faisceaux d'enroulement de stator (112, 114), dont chacun peut être mis en marche au moyen d'un transistor de puissance (124, 128) attribué, et qui peuvent être commandés par des signaux de position de rotor (OUT1, OUT2) en push-pull en fonction de la position du rotor (116), lesquels signaux peuvent être amenés aux bases de ces transistors de puissance respectivement par une résistance (150, 156), **caractérisé en ce qu'**une résistance de fuite de base (160) est prévue pour la base d'un transistor de puissance (124), laquelle résistance (160) est montée en série avec un premier transistor de verrouillage (162) et **en ce qu'**une résistance de fuite de base (170) est prévue pour la base de l'autre transistor de puissance (128), laquelle résistance (170) est montée en série avec un deuxième transistor de verrouillage (172), le premier transistor de verrouillage (162) pouvant être contrôlé au moins par le signal de base de l'autre transistor de puissance (128), et le deuxième transistor de verrouillage (172) pouvant être commandé au moins par le signal de base d'un transistor de puissance (124), afin d'exclure lors de la commutation un état conducteur passager et simultané de deux transistors de puissance (124, 128) et de contrôler l'opération de commutation par l'activation et la désactivation des résistances de fuite de base (160, 170).

2. Moteur selon la revendication 1, avec lequel le premier transistor de verrouillage (162) peut être contrôlé par une combinaison du signal de position de rotor (OUT2) pour l'autre transistor de puissance (128) et son signal de base, et le deuxième transistor de verrouillage (172) peut être contrôlé par une combinaison du signal de position de rotor (OUT1) pour un transistor de puissance (124) et son signal de base.

3. Moteur selon la revendication 1 ou 2, sur lequel les deux résistances de fuite de base (160, 170) ne sont pas efficaces en dehors des plages de temps de commutation.

4. Moteur selon l'une quelconque des revendications précédentes, avec lequel les faisceaux d'enroulement (112, 114) pouvant être commandés en push-pull sont couplés de façon inductive.

5. Moteur selon la revendication 4, avec lequel les faisceaux d'enroulement (112, 114) ont un enroulement bifilaire et/ou sont couplés par le paquet de tôle du stator.

6. Moteur selon l'une quelconque ou plusieurs des revendications 1 à 5, sur lequel un transistor de puissance (124) et l'autre transistor de puissance (128) présentent une résistance d'émetteur (132) commune.

7. Moteur selon l'une quelconque ou plusieurs des revendications 1 à 6, sur lequel un condensateur de Miller (152, 158) est attribué à chacun des transistors de puissance (124, 128).

8. Moteur selon l'une quelconque ou plusieurs des revendications précédentes, sur lequel l'amplitude d'un signal de position de rotor (OUT1, OUT2) augmente avec la tension de service (UB) croissante du moteur (110) au moins dans une plage partielle de la tension de service.

9. Moteur selon l'une quelconque ou plusieurs des revendications précédentes, sur lequel, pour la génération des signaux de position de rotor (OUT1, OUT2), il est prévu un composant (146), dont la tension de service (UB) est maintenue sensiblement constante au-dessus d'une valeur prédéfinie, afin de maintenir constantes les amplitudes des signaux de position de rotor en cas de dépassement de cette valeur prédéfinie.

10. Moteur selon l'une quelconque ou plusieurs des revendications précédentes, sur lequel l'augmentation et/ou la baisse des tensions de collecteur des transistors de puissance est une fonction de la tension de service (UB) lors de 1'opération de commutation.
